# EUROPEAN PATENT SPECIFICATION

(11) **EP 1 786 158 B1**
(45) Date of publication and mention of the grant of the patent: **09.09.2009**
(21) Application number: 06722211.7
(22) Date of filing: 30.03.2006
(51) Int. Cl.: H04L 12/56

(54) **METHODS AND SYSTEMS FOR INFORMING AND NEGOTIATING THE MONITOR ABILITY OF THE LABEL SWITCHING CAPABILITY**
VERFAHREN UND SYSTEME ZUR MITTEILUNG UND ZUR AUSHANDLUNG DER ÜBERWACHUNGSFÄHIGKEIT FÜR LABELBASIERTE VERMITTLUNG
PROCEDES ET SYSTEMES D'INFORMATION ET DE NEGOCIATION DE L'APTITUDE A SURVEILLER PROPRE A LA COMMUTATION DE LABEL

(30) Priority: 30.03.2005 CN 200510058847
(43) Date of publication of application: 16.05.2007
(73) Proprietor: Huawei Technologies Co., Ltd., Longgang District, Shenzhen Guangdong 518129 (CN)
(72) Inventor: HE, Jianfei Huawei Administration Building, 518129 Shenzhen Guangdong (CN)
(74) Representative: Thun, Clemens
(86) International application number: PCT/CN2006/000559
(87) International publication number: WO 2006/102851

(56) References cited:
- EP-A1- 1 187 405
- US-A1- 2004 184 407
- US-B1- 6 735 190

## Description

### Field of the Invention

The present invention relates to a technique of label switching, and in particular, to methods and systems for notifying and negotiating capabilities of monitoring performance of label switching path (LSP) implemented in a label switching network.

### Background of the Invention

As a key technique of Next Generation Network (NGN), Multi-Protocol Label Switching (MPLS) technique plays an increasingly important role in IP network. Originally the MPLS technique is provided for enhancing a forwarding speed of a router. Due to advantages of the MPLS technique per se, it has also seen wide application in traffic engineering (TE), Virtual Private Network (VPN) and Quality of Service (QoS), and has become an important standard of the large-scale Internet Protocol (IP) network.

With further modifications, the MPLS technique has gradually evolved into a General MPLS (GMPLS) technique. Currently, the GMPLS technique can be used in a packet switching network such as an Ethernet. The packet switching network can be generally referred to as a label switching network.

At present, a function of monitoring the label switching performance of LSP in a label switching network has to be implemented with hardware or firmware, for example, the function of monitoring label switching performance can be implemented on the source node and the destination node of the LSP via detecting the Fast Failure Detection (FFD) frame by the hardware. In this specification, the performance of LSP generally refers to the label switching performance of the LSP. As the fastest FFD can only send a frame per 10ms and there may be many LSPs to be monitored, thus in view of the balance of network resources, functions and different requirements of monitoring label switching performance of different service levels, the hardware resources of label switching network can not support to monitor label switching performance of all LSPs. Therefore, along with gradual increase of the application of communication level service, it has become an important issue to meet different requirements of monitoring the label switching performance of different LSPs.

In the prior art, a European patent (publication number: EP 1187405 A1) discloses a label switched communication network. In the disclosed label switched communication network, a third level of label is employed in conjunction with a dynamic multiplex constraint-based routed label switched path (CR-LSP) in order to achieve implicit switching at nodes within the network.

In the prior art, a US patent (publication number: US 2004/0184407 A1) discloses operations, administration, and maintenance related systems and methods associated with data communications. In a particular embodiment, an encapsulated operations, administrations and maintenance (OAM) data packet for use in connection with a service provider network is disclosed. The encapsulated OAM data packet includes a service provider destination address and a service provider source address. The service provider destination address is associated with a destination node within the service provider network; and the service provider source address is associated with a source node within the service provider network.

In the prior art, a US patent (publication number: US 6735190 B1) discloses a packet transport method device utilizing header removal fields. In this patent, the overhead is reduced and packet transport efficiency is increased for a flow of switched packets from a route by identifying a plurality of packets having a common destination node within a network and transmitting at least one control message to establish the flow of switched packets; the at least one control message including: (i) a label mapping message corresponding to the flow of switched packets and (ii) a header removal field.

### Summary of the Invention

Embodiments of the present invention provide a method for notifying capabilities of monitoring performance of LSP.

In addition, embodiments of the present invention further provide a method for negotiating capabilities of monitoring performance of LSP.

A method for notifying capabilities of monitoring performance of LSP includes the following steps:
a source node sends a request message for establishing an LSP, carrying capabilities of monitoring performance of LSP provided by the source node, to a destination node;
upon receiving the request message, the destination node returns a response message carrying capabilities of monitoring performance of LSP provided by the destination node to the source node.

A method for negotiating capabilities of monitoring performance of LSP includes the following steps:
a source node sends a request message for establishing an LSP, carrying capabilities of monitoring performance of LSP provided by the source node, to a destination node;
the destination node matches the capabilities of monitoring performance of LSP provided by the source node with capabilities of monitoring performance of LSP provided by the destination node, and returns a response message carrying the matched capabilities of monitoring performance of LSP to the source node.

Preferably, this method further includes the steps:
the source node carries a requirement degree identifier corresponding to each kind of capabilities of monitoring performance of LSP in the request message;
in the process of matching the capabilities of monitoring performance of LSP by the destination node, if the destination node does not provide the required capabilities of monitoring performance of LSP indicated by the requirement degree identifier, the destination node sends to the source node a negotiation failure message of capabilities of monitoring performance of LSP.

A system for notifying capabilities of monitoring performance of LSP includes a source node, configured to send a request message for establishing an LSP, carrying capabilities of monitoring performance of LSP provided by the source node; a destination node, configured to carry capabilities of monitoring performance of LSP provided by the destination node in a response message returned to the source node upon receiving the request message.

A system for negotiating capabilities of monitoring performance of LSP includes: a source node, configured to send a request message for establishing an LSP, carrying capabilities of monitoring performance of LSP provided by the source node; a destination node, configured to match the capabilities of monitoring performance of LSP provided by the source node with capabilities of monitoring performance of LSP provided by the destination node, and carry the matched capabilities of monitoring performance of LSP in a response message returned to the source node.

It is seen from the above, in the method for notifying capabilities of monitoring performance of LSP described in the embodiments of the present invention, the capabilities information of monitoring performance of LSP is carried in the process of establishing an LSP by a signaling message, which makes it possible that the source node and the destination node of the established LSP notify their own capabilities of monitoring performance of LSP to each other, so as to solve the problem that it is impossible to meet all requirements of monitoring performance of LSP when the label switching performance is monitored by the limited hardware or firmware resources in the related art.

In addition, in the method for negotiating capabilities of monitoring performance of LSP described in the embodiment of the present invention, the capabilities information of monitoring performance of LSP is carried in the process of establishing an LSP by a signaling message; the capabilities of monitoring performance of LSP are negotiated between the source node and the destination node of the established LSP according to the capabilities and resources of the destination node, which do not depend on the hardware and firmware of the label switching network, thereby meeting the different performance monitoring requirements. At the same time, resources of label switching network can be allocated to the LSP of which the performance needs to be monitored via the negotiation of capabilities of monitoring performance of LSP.

### Brief Description of the Drawings

Fig.1 is a schematic diagram of an LSP established between nodes of a label switching network.
Fig.2 is a flow chart illustrating the process of notifying capabilities of monitoring performance of LSP in accordance with an embodiment of the present invention when an LSP is established via the Resource Reservation Protocol (RSVP).
Fig.3 is a flow chart illustrating the process of negotiating capabilities of monitoring performance of LSP in accordance with an embodiment of the present invention when an LSP is established via the RSVP.
Fig.4 is a flow chart illustrating the process of notifying capabilities of monitoring performance of LSP in accordance with an embodiment of the present invention when an LSP is established via the Label Distribute Protocol (LDP) or Constraint Route LDP (CR-LDP).
Fig.5 is a schematic diagram illustrating a code of label request message with the extended LDP in accordance with an embodiment of the present invention.
Fig.6 is a schematic diagram illustrating the code of label mapping message with the extended LDP in accordance with an embodiment of the present invention.
Fig.7 is a flow chart illustrating the process of negotiating capabilities of monitoring performance of LSP when an LSP is established via the LDP or CR-LDP in accordance with an embodiment of the present invention.

### Embodiments of the Invention

In order to meet the different requirements of monitoring label switching performance of different LSPs, in the embodiment of the present invention, information of capabilities of monitoring performance of LSP is carried by a signaling message in the process of establishing an LSP, which makes it possible that the source node and the destination node of the established LSP notify or negotiate their own capabilities of monitoring performance of LSP with each other.

The described capabilities of monitoring the label switching performance of the LSP also include, the capabilities of monitoring packet-loss rate, delay, and delay jittering.

An LSP can be established through the RSVP, the LDP or the CR-LDP.

The methods for notifying and negotiating capabilities of monitoring the performance of the LSP mentioned in the embodiment of the present invention are hereinafter described in detail in accordance with embodiments of the present invention.

### A first embodiment:

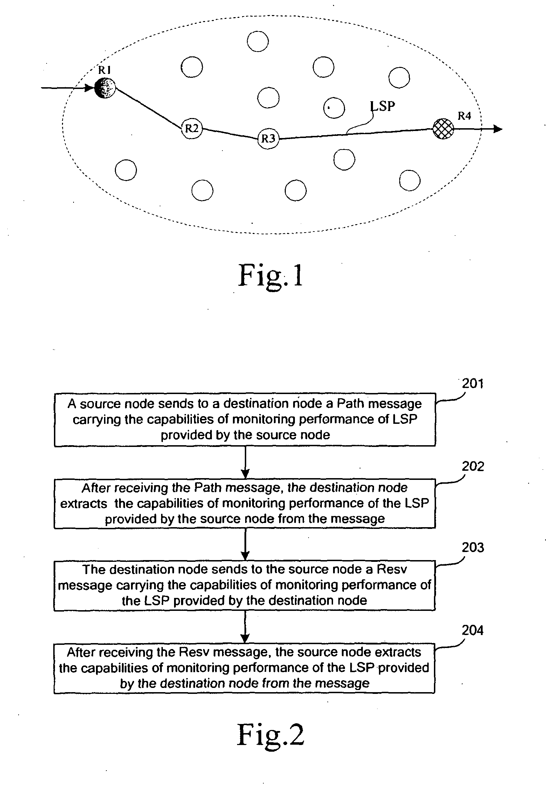

A method for notifying capabilities of monitoring performance of LSP between a source node and a destination node of an LSP is described in this embodiment by taking the process of establishing an LSP using the RSVP between Node R1 and Node R4 shown in Fig. 1 as an example.

In this embodiment, the LSP that will be established is R1->R2->R3->R4. Node R1 is a source node and Node R4 is a destination node. The method for notifying capabilities of monitoring performance of LSP between source node R1 and destination node R4 is as shown in Fig. 2, which includes the following steps.

Step 201, source node R1 sends to destination node R4 a Path message requesting for establishing an LSP, and the Path message carries the capabilities of monitoring the performance of the LSP provided by source node R1.

In this case, the capabilities of monitoring performance of LSP provided by source node R1 should be determined according to the capabilities of monitoring performance of LSP required by the LSP besides according to the resource and the capabilities of monitoring performance of LSP of source node R1.For example, if the LSP requires two kinds of capabilities of monitoring performance of LSP i.e. the capability of monitoring the packet-loss rate performance and the capability of monitoring the delay performance, and source node R1 can provide the two kinds of capabilities of monitoring performance of LSP, then source node R1 will carry the two kinds of capabilities of monitoring performance of LSP in the Path message.

As the existing RSVP does not support the notification of the above two kinds of capabilities of monitoring performance of the LSP, the existing Path message can not carry the above two kinds of capabilities of monitoring performance of LSP; therefore, it is needed to extend the existing RSVP in this embodiment.

According to the embodiment of the method, the RSVP is extended by adding a perMonitor Object carrying a performance monitoring field. The performance monitoring field can carry one or more kinds of capabilities of monitoring performance of LSP which are respectively indicated by fixed-number bits, for example, with 4 bits, up to 16 kinds of capabilities of monitoring performance of LSP can be indicated.

After the perfMonitor Object is added to the RSVP, source node R1 can carry the capabilities of monitoring performance of the LSP provided by source node R1 via the Path message carrying the perfMonitor Object to destination node R4 of the LSP. The format of Path message carrying the perfMonitor Object is as follows.

```
           <Path Message>::=<Common Header> [<INTEGRITY>]
                        <SESSION> <RSVP_HOP>
                             <TIME_VALUES>
                           [<POLICY_DATA>...]
                            [<sender descriptor>]
              <sender descriptor>::=<SENDER_TEMPLATE>
                 <SENDER_TSPEC><perfMonitor Object>
                               [<ADSPEC>]
```

Step 202, after receiving the Path message, destination node R4 extracts the capabilities of monitoring performance of the LSP provided by source node R1 from the message.

As the capabilities of monitoring performance of LSP provided by source node R1 is carried in the perfMonitor Object of Path message, destination node R4 can extract the capabilities of monitoring performance of LSP from the perMonitor Object of the Path message.

Destination node R4 can learn the capabilities of monitoring performance of LSP provided by source node R1 via the above Steps 201 and 202.

Step 203, destination node R4 sends to source node R1 a Resv message carrying the capabilities of monitoring performance of LSP provided by destination node R4.

Likewise, destination node R4 can send to source node R1 of the LSP the capabilities of monitoring performance of LSP provided by destination node R4 via the Resv message which carries the perfMonitor Object. The format of Resv message carrying the perfMonitor Object is as follows.

```
          <Resv Message>::=<Common Header> [<INTEGRITY>]
                        <SESSION> <RSVP_HOP>
                            <TIME_VALUES>
                     [<RESV_CONFIRM>] [<SCOPE>]
                           [<POLICY_DATA>...]
                       <STYLE> <flow descriptor list>
                     <flow descriptor list>::=<empty> |
        <flow descriptor list> <flow descriptor><perfMonitor Object>
```

Step 204, after receiving the Resv message, source node R1 extracts from the message the capabilities of monitoring performance of the LSP provided by destination node R4 carried in the perfMonitor Object.

Source node R1 can learn the capabilities of monitoring performance of LSP provided by destination node R4 via the above Steps 203 and 204.

Up to now, an LSP is established and the notification of capabilities of monitoring performance of the LSP is implemented between source node R1 and destination node R4 of the established LSP.

### A second embodiment:

A method for negotiating capabilities of monitoring performance of LSP between the source node and the destination node of an LSP is described by the process of establishing an LSP through the RSVP between the Node R1 and the Node R4 shown in Fig. 1.

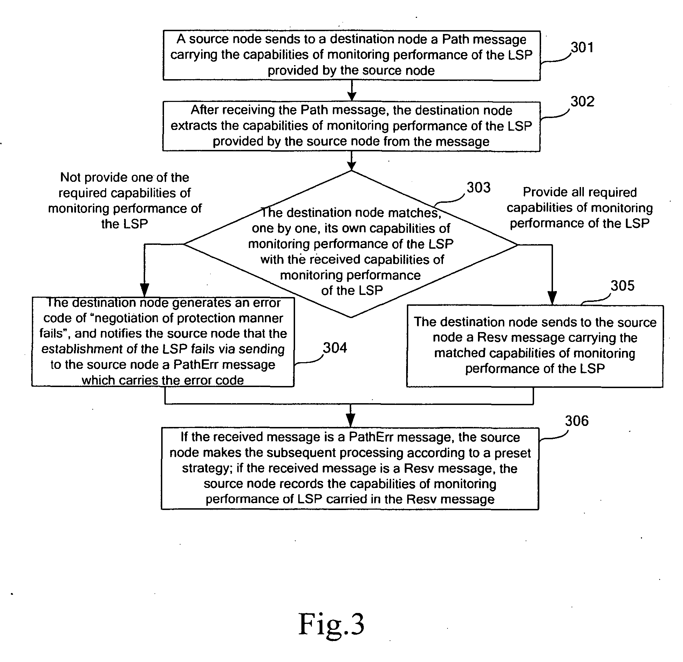

In this embodiment, the LSP that will be established is R1->R2->R3->R4. Node R1 is a source node and Node R4 is a destination node. The method for negotiating capabilities of monitoring performance of LSP between source node R1 and destination node R4 is as shown in Fig. 3, which includes the following steps.

Step 301, source node R1 sends to destination node R4 a Path message requesting for establishing an LSP, and the Path message carries the capabilities of monitoring performance of LSP provided by source node R1 and a requirement degree identifier for each capability of monitoring performance of LSP, for example, whether such a capability of monitoring performance of LSP is required or optional.

In this case, the capabilities of monitoring performance of LSP provided by source node R1 should be determined according to the capabilities of monitoring performance of LSP required by the LSP besides according to the resource and capabilities of monitoring performance of LSP of source node R1. For example, if the LSP requires two kinds of capabilities of monitoring performance of LSP i.e. monitoring the packet-loss rate performance and monitoring the delay performance, and source node R1 can provide the two kinds of capabilities of monitoring performance of LSP, source node R1 deems that the capabilities of monitoring packet-loss rate performance is required and the capabilities of monitoring delay performance is optional. Then source node R1 will carry the two kinds of capabilities of monitoring performance of LSP i.e. the capability of monitoring packet-loss rate performance and the capability of monitoring delay performance in the Path message, and indicates that the capability of monitoring packet-loss rate performance is required while the capability of monitoring delay performance is optional.

In order to implement the negotiation of capabilities of monitoring performance of LSP, it is needed to extend the existing RSVP in this embodiment. According to the embodiment of the method, the RSVP is extended by adding a perfMonitor Object carrying a performance monitoring field. The performance monitoring field can carry one or more kinds of capabilities of monitoring performance of LSP which are respectively indicated by fixed-number bits. In addition, it is required to indicate, by using fixed-number bits, whether each kind of capabilities of monitoring performance of LSP is required or optional in the performance monitoring field. If the destination node can not support the required capabilities of monitoring performance of LSP, the establishment of LSP fails; if the destination node can not support the optional capabilities of monitoring performance of LSP, the establishment of LSP is still allowed.

In this step, the format of Path message sent by source node R1 is the same as that described in the first embodiment.

Step 302, after receiving the Path message, destination node R4 extracts the capabilities of monitoring performance of the LSP provided by source node R1 from the message.

Similar to Step 202, destination node R4 can extract the capabilities of monitoring performance of the LSP from the perfMonitor Object of the received Path message.

Destination node R4 can learn the capabilities of monitoring performance of the LSP provided by source node R1 and the different requirement for each capability of monitoring performance of the LSP via the above Step 301 and Step 302.

Step 303, destination node R4 matches, one by one, its own resources and capabilities of monitoring performance of the LSP with the capabilities of monitoring performance of the LSP that are required by the LSP and that can be provided by source node R1 carried in the Path message. If destination node R4 can not provide one of the required capabilities of monitoring performance of LSP, proceed to Step 304; otherwise proceed to Step 305.

Step 304, destination node R4 generates an error code of "negotiation of protection manner fails", and notifies the source node that the establishment of LSP fails via sending to the source node a PathErr message which carries the error code, and proceed to Step 306.

As the existing RSVP does not define an error code indicating that the negotiation of protection manner fails, it is needed to extend the RSVP to implement the above Step 304. The detailed process includes: extending an Error Code field and an Error Value field of an existing ERROR_SPEC object, adding a code and an error value indicating that the negotiation of protection manner fails, and carrying the extended ERROR_SPEC object in the PathErr message to notify source node R1 of LSP that the negotiation of protection manner fails.

Step 305, destination node R4 sends to source node R1 a Resv message carrying the matched capabilities of monitoring performance of LSP, and proceed to Step 306.

The format of Resv message sent in this step is the same as that described in the first embodiment. The capabilities of monitoring performance of the LSP provided by destination node R4, matching the capabilities of monitoring performance of LSP, are carried in the perfMonitor Object carried in the extended Resv message.

Step 306, when source node R1 receives the message returned from destination node R4, if the received message is a PathErr message carrying an error code which indicates that the negotiation of protection manner fails, source node R1 makes the subsequent processing according to a preset strategy, for example, it may initiate a negotiation of capabilities of monitoring performance of LSP again by lowering the requirement of capabilities of monitoring performance of LSP, or terminate the process of establishing the LSP; if the received message is a Resv message carrying the matched capabilities of monitoring performance of LSP, source node R1 learns the capabilities of monitoring performance of LSP that can be supported by destination node R4 via recording the capabilities of monitoring performance of the LSP in the performance monitoring field carried in the perfMonitor Object of the Resv message.

Up to now, an LSP is established and the negotiation of capabilities of monitoring performance of LSP is implemented between source node R1 and destination node R4 of the established LSP.

### A third embodiment:

A method for notifying capabilities of monitoring performance of LSP between a source node and a destination node of an LSP is described in this embodiment by taking the process of establishing the LSP through the LDP or CR-LDP between Node R1 and Node R4 shown in Fig.1 as an example.

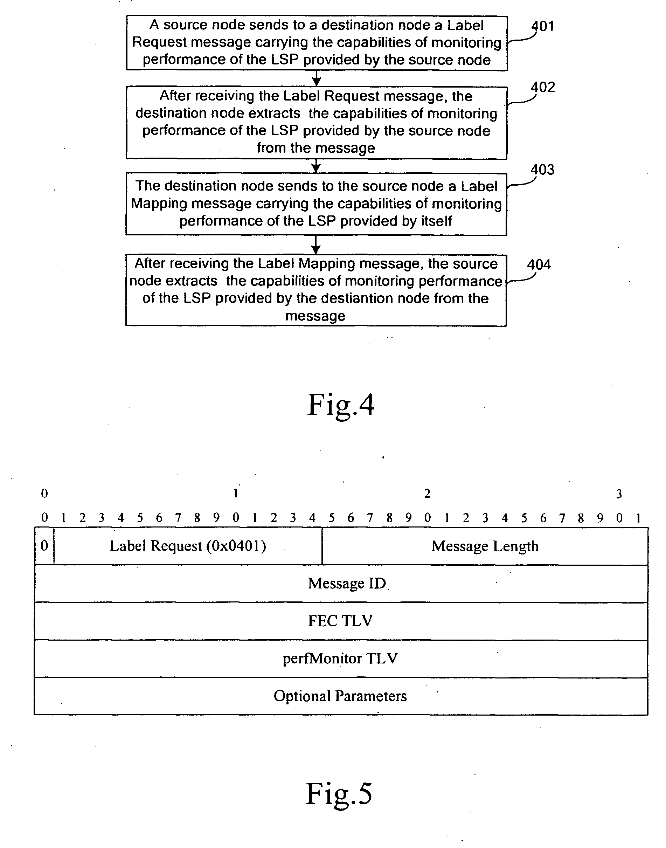

In this embodiment, the LSP that will be established is R1->R2->R3->R4. Node R1 is a source node and Node R4 is a destination node. The method for notifying capabilities of monitoring performance of LSP between source node R1 and destination node R4 is as shown in Fig. 4, which includes the following steps.

Step 401, source node R1 sends to destination node R4 a Label Request message requesting for establishing an LSP, and the Label Request message carries the capabilities of monitoring performance of the LSP that can be provided by source node R1.

In this case, the capabilities of monitoring performance of LSP provided by source node R1 should be determined according to the capabilities of monitoring performance of LSP required by the LSP besides according to the resources and capabilities of monitoring performance of LSP of source node R1.

As the existing LDP or CR-LDP does not support the above notification of capabilities of monitoring performance of LSP, the existing Label Request message can not carry the capabilities of monitoring performance of LSP provided by source node R1; therefore, it is needed to extend the existing LDP or CR-LDP.

According to the main method, the LDP or CR-LDP is extended to incorporate a perfMonitor TLV carrying a performance monitoring field. The performance monitoring field can carry several kinds of capabilities of monitoring performance of LSP which are respectively indicated by fixed-number bits.

After the perfMonitor Object is incorporated in the LDP or CR-LDP, source node R1 can send to destination node R4 the capabilities of monitoring performance of the LSP provided by source node R1 via the Label Request message carrying the perfMonitor TLV. It is needed to add a perfMonitor TLV to the Label Request message to achieve the above objective, and the format of an extended Label Request message is as shown in Fig. 5.

Step 402, after receiving the Label Request message, destination node R4 extracts the capabilities of monitoring performance of LSP provided by source node R1 from the message.

As the capabilities of monitoring performance of the LSP provided by source node R1 is carried in the perfMonitor TLV of Label Request message, destination node R4 can extract the capabilities of monitoring performance of LSP from the perfMonitor TLV carried by the received Label Request message.

Destination node R4 can learn the capabilities of monitoring performance of LSP provided by source node R1 of LSP via the above Step 40.1 and Step 402.

Step 403, destination node R4 sends to source node R1 a Label Mapping message carrying the capabilities of monitoring performance of LSP provided by destination node R4.

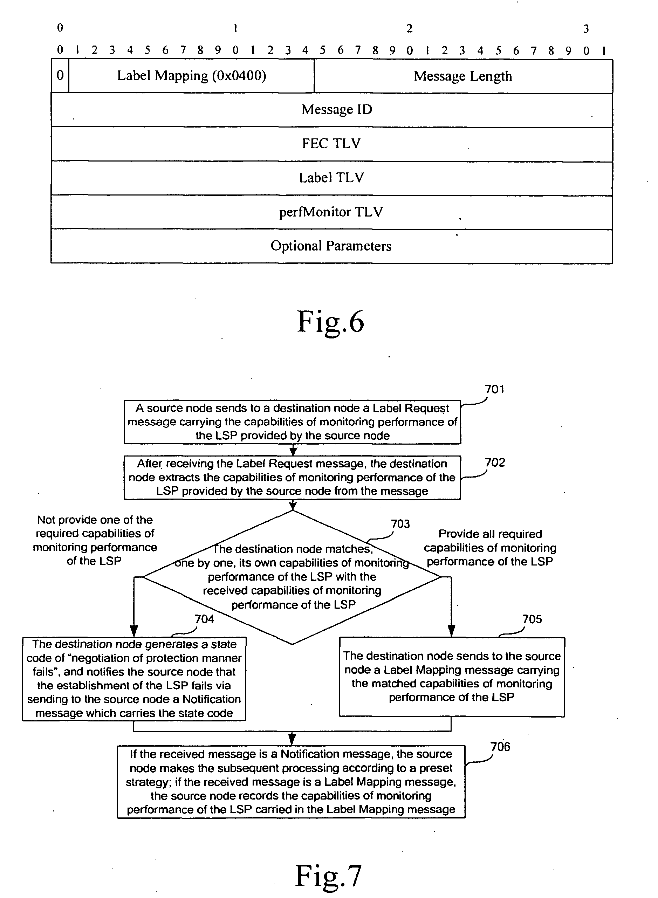

Likewise, the capabilities of monitoring performance of the LSP provided by destination node R4 are also carried in a perfMonitor TLV, and it is needed to add a perfMonitor TLV to the Label Mapping message. The format of extended Label Mapping message is as shown in Fig. 6.

Step 404, after receiving the Label Mapping message, source node R1 extracts the perfMonitor TLV from the message and learns the capabilities of monitoring performance of LSP provided by destination node R4.

Source node R1 can learn the capabilities of monitoring performance of the LSP provided by destination node R4 via the above Step 403 and Step 404.

Up to now, an LSP is established and the notification of capabilities of monitoring performance of LSP is implemented between source node R1 and destination node R4 of the established LSP.

### A fourth embodiment:

A method for negotiating capabilities of monitoring performance of LSP between the source node and the destination node of an LSP is described in this embodiment by taking the process of establishing an LSP through the LDP or CR-LDP between the Node R1 and the Node R4 shown in Fig. 1 as an example.

In this embodiment, the LSP that will be established is R1->R2->R3->R4. Node R1 is a source node and Node R4 is a destination node. The method for negotiating capabilities of monitoring performance of LSP between source node R1 and destination node R4 is as shown in Fig. 7, which includes the following steps.

Step 701, source node R1 sends to destination node R4 a Label Request message requesting for establishing an LSP, and the Label Request message carries the capabilities of monitoring performance of the LSP provided by source node R1 and a requirement degree identifier for each kind of capabilities of monitoring performance of the LSP, for example, whether the capability of monitoring performance of LSP is required or optional.

In this case, the capabilities of monitoring performance of LSP provided by source node R1 should be determined according to the capabilities of monitoring performance of LSP required by the LSP besides according to the resource and capabilities of monitoring performance of LSP of source node R1.

In order to implement the negotiation of capabilities of monitoring performance of the LSP, it is needed to extend the existing LDP or CR-LDP in this embodiment. According to the main method, the LDP or CR-LDP is also extended to incorporate a perfMonitor TLV carrying a performance monitoring field. The performance monitoring field can carry one or more kinds of capabilities of monitoring performance of LSP which are respectively indicated by fixed-number bits. In addition, in the performance monitoring field by using fixed-number bits, it is needed to indicate whether each kind of capabilities of monitoring performance of LSP is required or optional. If the destination node can not support a required capability of monitoring performance of LSP, the establishment of LSP fails; if the destination node can not support an optional capability of monitoring performance of LSP, the establishment of LSP is still allowed.

In this step, the format of Label Request message sent by source node R1 is the same as that described in Fig. 5.

Step 702, after receiving the Label Request message, destination node R4 extracts the capabilities of monitoring performance of LSP provided by source node R1 from the message.

Similar to Step 402, destination node R4 can extract the capabilities of monitoring performance of LSP from the perfMonitor TLV of the Label Request message.

Destination node R4 can learn the capabilities of monitoring performance of the LSP provided by source node R1 and the different requirement for each kind of capabilities of monitoring performance of the LSP via the above Step 701 and Step 702.

Step 703, destination node R4 matches, one by one, its own resource and capabilities of monitoring performance of the LSP with the capabilities of monitoring performance of the LSP that is required by the LSP and that can be provided by source node R1 carried in the Label Request message. If destination node R4 can not provide one kind of the required capabilities of monitoring performance of the LSP, proceed to Step 704; otherwise proceed to Step 705.

Step 704, destination node R4 generates a state code of "negotiation of protection manner fails", and notifies source node R1 that the establishment of LSP fails via sending to the source node a Notification message carrying the state code, proceed to Step 706.

As the existing LDP or CR-LDP does not define a state code indicating that the negotiation of protection manner fails, it is needed to extend the LDP or CR-LDP to implement the above Step 704. The detailed process includes: extending such field as the State Code of the existing Status TLV, adding a state code indicating that the negotiation of protection manner fails, and carrying the extended Status TLV in the Notification message to notify source node R1 of LSP that the negotiation of protection manner fails.

Step 705, destination node R4 sends to source node R1 a Label Mapping message carrying the matched capabilities of monitoring performance of LSP, proceed to Step 706.

The format of Label Mapping message sent in this step is the same as that described in Fig. 6. The capabilities of monitoring performance of the LSP provided by destination node R4, matching the capabilities of monitoring performance of LSP, are carried in the perfMonitor TLV carried in the extended Label Mapping message.

Step 706, when source node R1 receives the message returned from destination node R4, if the received message is a Notification message carrying the state code of "negotiation of protection manner fails", source node R1 makes the subsequent processing according to a preset strategy, for example, it may initiate a negotiation of capabilities of monitoring performance of LSP again by lowering the requirement of capabilities of monitoring performance of LSP, or terminate the process of establishing the LSP; if the received message is a Label Mapping message carrying the matched capabilities of monitoring performance of LSP, the capabilities of monitoring performance of LSP of the performance monitoring field carried in the perfMonitor TLV of the Label Mapping message are recorded, and source node R1 learns the capabilities of monitoring performance of LSP that supported by destination node R4.

Up to now, an LSP is established and the negotiation of capabilities of monitoring performance of LSP is implemented between source node R1 and destination node R4 of the established LSP.

Accordingly, it is intended that this invention includes the changes and variations in case that such changes and variations come within the scope as set forth in the appended claims and the equivalent techniques thereof.

## Claims

1. A method for notifying capabilities of monitoring performance of Label Switching Path (LSP), comprising:
sending, by a source node, a request message for establishing an LSP, carrying capabilities of monitoring performance of LSP provided by the source node, to a destination node(201, 401); and
upon receiving the request message, returning, by the destination node, a response message carrying capabilities of monitoring performance of LSP provided by the destination node to the source node(203, 403).

2. The method of claim 1, wherein:
the LSP is established through the Resource Reservation Protocol (RSVP);
the request message comprises a Path message (201);
the response message comprises a Resv message(203).

3. The method of claim 2, further comprising: extending a perfMonitor Object containing a performance monitoring field in the RSVP;
wherein the source node carries the capabilities of monitoring performance of LSP provided by the source node in the performance monitoring field of perfMonitor Object, and sends to the destination node the capabilities of monitoring performance of LSP through the Path message carrying the perfMonitor Object(201); and
the destination node carries the capabilities of monitoring performance of LSP provided by the destination node in the performance monitoring field of perfMonitor Object, and sends to the source node the capabilities of monitoring performance of LSP through the Resv message carrying the perfMonitor Object(203).

4. The method of claim 1, wherein:
the LSP is established through the Label Distribute Protocol (LDP) or Constraint Route LDP (CR-LDP);
the request message comprises a Label Request message(401);
the response message comprises a Label Mapping message(403).

5. The method of claim 4, further comprising: extending a perfMonitor type-length-value (TLV) containing a performance monitoring field in the LDP or CR-LDP;
wherein the source node carries the capabilities of monitoring performance of LSP provided by the source node in the performance monitoring field of perfMonitor TLV, and sends to the destination node the capabilities of monitoring performance of LSP through the Label Request message carrying the perfMonitor TLV(401);and
the destination node carries the capabilities of monitoring performance of LSP provided by the destination node in the performance monitoring field of perfMonitor TLV, and sends to the source node the capabilities of monitoring performance of LSP through the Label Mapping message carrying the perfMonitor TLV(403).

6. A method for negotiating capabilities of monitoring performance of Label Switching Path (LSP), comprising:
sending, by a source node, a request message for establishing an LSP, carrying capabilities of monitoring performance of LSP provided by the source node, to a destination node(301, 701); and
matching, by the destination node, the capabilities of monitoring performance of LSP provided by the source node with capabilities of monitoring performance of LSP provided by the destination node(303, 703), and returning a response message carrying the matched capabilities of monitoring performance of LSP to the source node(305, 705).

7. The method of claim 6, further comprising:
carrying, by the source node, a requirement degree identifier corresponding to each kind of capabilities of monitoring performance of LSP in the request message;
wherein in the process of matching the capabilities of monitoring performance of LSP by the destination node, if the destination node does not provide the required capabilities of monitoring performance of LSP indicated by the requirement degree identifier, the destination node sends to the source node a negotiation failure message of capabilities of monitoring performance of LSP(304, 704).

8. The method of claim 7, further comprising:
upon receiving the negotiation failure message of capabilities of monitoring performance of LSP, lowering by the source node requirements of capabilities of monitoring performance of LSP and initiating a negotiation of capabilities of monitoring performance of LSP(306, 706).

9. The method of claim 7, further comprising:
upon receiving the negotiation failure message of capabilities of monitoring performance of LSP, terminating by the source node current negotiation of capabilities of monitoring performance of LSP(306, 706).

10. The method of claim 7, wherein:
the LSP is established through the Resource Reservation Protocol (RSVP);
the request message comprises a Path message(301);
the response message comprises a Resv message(305);
the negotiation failure message of capabilities of monitoring performance of LSP comprises a Patherr message(304).

11. The method of claim 10, further comprising: in the RSVP, extending a perfMonitor Object containing a performance monitoring field;
wherein the source node carries the capabilities of monitoring performance of LSP provided by the source node in the performance monitoring field of perfMonitor Object, and sends to the destination node the capabilities of monitoring performance of LSP through the Path message carrying the perfMonitor Object(301); and
the destination node carries the capabilities of monitoring performance of LSP provided by the destination node in the performance monitoring field of perfMonitor Object, and sends to the source node the capabilities of monitoring performance of LSP through the Resv message carrying the perfMonitor Object(305).

12. The method of claim 10, further comprising: adding an error code and an error value, indicating that the negotiation of capabilities of monitoring performance of LSP fails, to an error code field and an error value field to extend an error description object;
wherein when the destination node does not provide the required capabilities of monitoring performance of LSP, the destination node sends a PathErr message carrying the error description object extended to the source node to notify the source node that the negotiation of capabilities of monitoring performance of LSP fails(304).

13. The method of claim 7, wherein:
the LSP is established through a Label Distribute Protocol (LDP) or a Constraint Route LDP (CR-LDP);
the request message comprises a Label Request message(701);
the response message comprises a Label Mapping message(705);
the negotiation failure message of capabilities of monitoring performance of LSP comprises a Notification message(704).

14. The method of claim 13, further comprising: extending a perfMonitor type-length-value (TLV) containing a performance monitoring field in the LDP or CR-LDP;
wherein the source node carries the capabilities of monitoring performance of LSP provided by the source node in the performance monitoring field of perfMonitor TLV, and sends to the destination node the capabilities of monitoring performance of LSP provided by the source node through the Label Request message carrying the perfMonitor TLV(701); and
the destination node carries the capabilities of monitoring performance of LSP provided by the destination node in the performance monitoring field of perfMonitor TLV, and sends to the source node the capabilities of monitoring performance of LSP provided by the destination node through the Label Mapping message carrying the perfMonitor TLV(705).

15. The method of claim 13, further comprising: adding a state code, indicating that the negotiation of capabilities of monitoring performance of LSP fails, to a state code field to extend the state code field of the existing state TLV;
wherein when the destination node does not provide the required capabilities of monitoring performance of LSP, the destination node sends a Notification message carrying the state TLV to notify the source node that the negotiation of capabilities of monitoring performance of LSP fails(704).

16. A system for notifying capabilities of monitoring performance of Label Switching Path (LSP), comprising:
a source node, configured to send a request message for establishing an LSP, carrying capabilities of monitoring performance of LSP provided by the source node;
a destination node, configured to carry capabilities of monitoring performance of LSP provided by the destination node in a response message returned to the source node upon receiving the request message.

17. The system of claim 16, wherein:
the Resource Reservation Protocol (RSVP) is used to establish the LSP, and the RSVP is extended to have a perfMonitor Object containing a performance monitoring field;
the source node is configured to carry the capabilities of monitoring performance of LSP provided by the source node in the performance monitoring field of perfMonitor Object, and send to the destination node the capabilities of monitoring performance of LSP through a Path message carrying the perfMonitor Object; and
the destination node is configured to carry the capabilities of monitoring performance of LSP provided by the destination node in the performance monitoring field of perfMonitor Object, and send to the source node the capabilities of monitoring performance of LSP through a Resv message carrying the perfMonitor Object.

18. The system of claim 16, wherein:
the Label Distribute Protocol (LDP) or Constraint Route LDP (CR-LDP) is used to establish the LSP, and the LDP or the CR-LDP is extended to have a perfMonitor type-length-value (TLV) containing a performance monitoring field;
the source node is configured to carry the capabilities of monitoring performance of LSP provided by the source node in the performance monitoring field of perfMonitor TLV, and send to the destination node the capabilities of monitoring performance of LSP through a Label Request message carrying the perfMonitor TLV; and
the destination node is configured to carry the capabilities of monitoring performance of LSP provided by the destination node in the performance monitoring field of perfMonitor TLV, and send to the source node the capabilities of monitoring performance of LSP through a Label Mapping message carrying the perfMonitor TLV.

19. A system for negotiating capabilities of monitoring performance of Label Switching Path (LSP), comprising:
a source node ,configured to send a request message for establishing an LSP, carrying capabilities of monitoring performance of LSP provided by the source node;
a destination node, configured to match the capabilities of monitoring performance of LSP provided by the source node with capabilities of monitoring performance of LSP provided by the destination node, and carry the matched capabilities of monitoring performance of LSP in a response message returned to the source node.

20. The system of claim 19, wherein:
the source node is further configured to carry a requirement degree identifier corresponding to each kind of capabilities of monitoring performance of LSP in the request message;
if the destination node does not provide the required capabilities of monitoring performance of LSP indicated by the requirement degree identifier, the destination node is configured to send to the source node a negotiation failure message of capabilities of monitoring performance of LSP; and
the source node is further configured to lower requirements of capabilities of monitoring performance of LSP and initiate a negotiation of capabilities of monitoring performance of LSP upon receiving the negotiation failure message of capabilities of monitoring performance of LSP.

21. The system of claim 19, wherein:
the LSP is established through the Resource Reservation Protocol (RSVP), and the RSVP is extended to have a perfMonitor Object containing a performance monitoring field;
the source node is configured to carry the capabilities of monitoring performance of LSP provided by the source node in the performance monitoring field of perfMonitor Object, and send to the destination node the capabilities of monitoring performance of LSP through a Path message carrying the perfMonitor Object; and
the destination node is configured to carry the capabilities of monitoring performance of LSP provided by the destination node in the performance monitoring field of perfMonitor Object, and send to the source node the capabilities of monitoring performance of LSP through a Resv message carrying the perfMonitor Object.

22. The system of claim 21, wherein:
the RSVP is further extended, an error code and an error value are added to an error code field and an error value field of an error description object, the error code and the error value indicate that the negotiation of capabilities of monitoring performance of LSP fails; and
when the destination node does not provide the required capabilities of monitoring performance of LSP, the destination node is configured to send a PathErr message carrying the error description object to the source node to notify the source node that the negotiation of capabilities of monitoring performance of LSP fails.

23. The system of claim 19, wherein:
the LSP is established through the Label Distribute Protocol (LDP) or a Constraint Route LDP (CR-LDP), and the LDP or the CR-LDP is extended to have a perfMonitor type-length-value (TLV) carrying a performance monitoring field;
the source node is configured to carry the capabilities of monitoring performance of LSP provided by the source node in the performance monitoring field of perfMonitor TLV, and send to the destination node the capabilities of monitoring performance of LSP provided by the source node through a Label Request message carrying the perfMonitor TLV; and
the destination node is configured to carry the capabilities of monitoring performance of LSP provided by the destination node in the performance monitoring field of perfMonitor TLV, and send to the source node the capabilities of monitoring performance of LSP provided by the destination node through a Label Mapping message carrying the perfMonitor TLV.

24. The system of claim 23, wherein:
a state code field of the existing state TLV is extended, a state code indicating that a negotiation of capabilities of monitoring performance of LSP fails is added to the state code field of the existing state TLV; and
when the destination node does not provide the required capabilities of monitoring performance of LSP, the destination node is configured to send a Notification message carrying the state TLV to notify the source node that the negotiation of capabilities of monitoring performance of LSP fails.

## Patentansprüche

1. Verfahren zum Melden von Kapazitäten zur Überwachung der Ausführung eines Label Switching Paths (LSP), umfassend:
Senden einer Anfragemeldung zum Aufbauen eines LSP, die die Kapazitäten zur Überwachung der Ausführung des LSP transportiert, die von dem Quellknoten bereitgestellt werden, durch einen Quellknoten an einen Zielknoten (201,401); und
nach Empfangen der Anfragemeldung, Zurücksenden einer Antwortmeldung, die die Kapazitäten zur Überwachung der Ausführung des LSP transportiert, die von dem Zielknoten bereitgestellt werden, durch den Zielknoten an den Quellknoten (203,403).

2. Verfahren nach Anspruch 1, wobei:
der LSP durch das Resource Reservation Protocol (RSVP) aufgebaut wird;
die Anfragemeldung eine Path-Meldung umfasst (201);
die Antwortmeldung eine Resv-Meldung umfasst (203).

3. Verfahren nach Anspruch 2, das ferner umfasst: Erweitern eines perfMonitor-Objekts, das ein Ausführungs-Überwachungsfeld in dem RSVP enthält;
wobei der Quellknoten die Kapazitäten zur Überwachung der Ausführung des LSP, die durch den Quellknoten bereitgestellt werden, in dem Ausführungs-Überwachungsfeld des perfMonitor-Objekts transportiert, und die Kapazitäten zur Überwachung der Ausführung des LSP durch die Path-Meldung, die das perfMonitor-Objekt transportiert, an den Zielknoten sendet (201); und
wobei der Zielknoten die Kapazitäten zur Überwachung der Ausführung des LSP, die durch den Zielknoten bereitgestellt werden, in dem Ausführungs-Überwachungsfeld des perfMonitor-Objekts transportiert, und die Kapazitäten zur Überwachung der Ausführung des LSP durch die Resv-Meldung, die das perfMonitor-Objekt transportiert, an den Quellknoten sendet (203).

4. Verfahren nach Anspruch 1, wobei:
der LSP durch das Label Distribute Protocol (LDP) oder Constraint Route LDP (CR-LDP) aufgebaut wird;
die Anfragemeldung eine Label-Request-Meldung umfasst (401);
die Antwortmeldung eine Label-Mapping-Meldung umfasst (403).

5. Verfahren nach Anspruch 4, das ferner umfasst: Erweitern eines perfmonitor-Typ-Länge-Werts (TLV), der ein Ausführungs-Überwachungsfeld in dem LDP oder CR-LDP enthält;
wobei der Quellknoten die Kapazitäten zur Überwachung der Ausführung des LSP, die durch den Quellknoten bereitgestellt werden, in dem Ausführungs-Überwachungsfeld des perfMonitor-TLV transportiert, und die Kapazitäten zur Überwachung der Ausführung des LSP durch die Label-Request-Meldung, die den perfMonitor-TLV transportiert, an den Zielknoten sendet (401); und
wobei der Zielknoten die Kapazitäten zur Überwachung der Ausführung des LSP, die durch den Zielknoten bereitgestellt werden, in dem Ausführungs-Überwachungsfeld des perfMonitor-TLV transportiert, und die Kapazitäten zur Überwachung der Ausführung des LSP durch die Label-Mapping-Meldung, die den perfMonitor-TLV transportiert, an den Quellknoten sendet (403).

6. Verfahren zum Aushandeln von Kapazitäten zur Überwachung der Ausführung eines Label Switching Paths (LSP), umfassend:
Senden einer Anfragemeldung zum Aufbauen eines LSP, die die Kapazitäten zur Überwachung der Ausführung des LSP transportiert, die von dem Quellknoten bereitgestellt werden, durch einen Quellknoten an einen Zielknoten (301,701); und
Abgleichen der Kapazitäten zur Überwachung der Ausführung des LSP, die durch den Quellknoten bereitgestellt werden, durch den Zielknoten mit den Kapazitäten zur Überwachung der Ausführung des LSP, die durch den Zielknoten bereitgestellt werden (303,703), und Zurücksenden einer Antwortmeldung, die die abgeglichenen Kapazitäten zur Überwachung der
Ausführung des LSP transportiert, an den Quellknoten (305,705).

7. Verfahren nach Anspruch 6, ferner umfassend:
Transportieren eines Identifizierers zur Bestimmung des Bedarfs, der mit jeder Art von Kapazitäten zur Überwachung der Ausführung des LSP korrespondiert, in der Anfragemeldung;
wobei während des Abgleichvorgangs der Kapazitäten zur Überwachung der Ausführung des LSP durch den Zielknoten, falls der Zielknoten nicht die erforderlichen Kapazitäten zur Überwachung der Ausführung des LSP bereitstellt, die durch den Identifizierer zur Bestimmung des Bedarfs angezeigt werden, der Zielknoten an den Quellknoten eine Fehlermeldung bezüglich der Aushandlung der Kapazitäten zur Überwachung der Ausführung des LSP sendet (304,704).

8. Verfahren nach Anspruch 7, ferner umfassend:
nach Empfangen der Fehlermeldung bezüglich der Aushandlung der Kapazitäten zur Überwachung der Ausführung des LSP, Senken der Anforderungen an Kapazitäten zur Überwachung der Ausführung des LSP durch den Quellknoten und Initiieren einer Aushandlung der Kapazitäten zur Überwachung der Ausführung des LSP (306,307).

9. Verfahren nach Anspruch 7, ferner umfassend:
nach Empfangen der Fehlermeldung bezüglich der Aushandlung der Kapazitäten zur Überwachung der Ausführung des LSP, Beenden der laufenden Aushandlung der Kapazitäten zur Überwachung der Ausführung des LSP durch den Quellknoten (306,706).

10. Verfahren nach Anspruch 7, wobei:
der LSP durch das Resource Reservation Protocol (RSVP) aufgebaut wird;
die Anfragemeldung eine Path-Meldung umfasst (301);
die Antwortmeldung eine Resv-Meldung umfasst (305);
die Fehlermeldung bezüglich der Aushandlung der Kapazitäten zur Überwachung der Ausführung des LSP eine PathErr-Meldung umfasst (304).

11. Verfahren nach Anspruch 10, ferner umfassend: Erweitern eines perfMonitor-Objekts, das ein Ausführungs-Überwachungsfeld in dem RSVP enthält;
wobei der Quellknoten die Kapazitäten zur Überwachung der Ausführung des LSP, die durch den Quellknoten bereitgestellt werden, in dem Ausführungs-Überwachungsfeld des perfMonitor-Objekts transportiert, und die Kapazitäten zur Überwachung der Ausführung des LSP durch die Path-Meldung, die das perfMonitor-Objekt transportiert, an den Zielknoten sendet (301); und
wobei der Zielknoten die Kapazitäten zur Überwachung der Ausführung des LSP, die durch den Zielknoten bereitgestellt werden, in dem Ausführungs-Überwachungsfeld des perfMonitor-Objekts transportiert, und die Kapazitäten zur Überwachung der Ausführung des LSP durch die Resv-Meldung, die das perfMonitor-Objekt transportiert, an den Quellknoten sendet (305).

12. Verfahren nach Anspruch 10, ferner umfassend: Hinzufügen eines Fehler-Codes und eines Fehler-Werts, die anzeigen, dass die Aushandlung der Kapazitäten zur Überwachung der Ausführung des LSP fehlschlägt, zu einem Fehler-Code-Feld und einem Fehler-Wert-Feld, um ein Fehler-Beschreibungsobjekt zu erweitern;
wobei, wenn der Zielknoten nicht die erforderlichen Kapazitäten zur Überwachung der Ausführung des LSP bereitstellt, der Zielknoten eine PathErr-Meldung, die das erweiterte Fehler-Beschreibungsobjekt transportiert, an den Quellknoten sendet, um den Quellknoten zu benachrichtigen, dass die Aushandlung der Kapazitäten zur Überwachung der Ausführung des LSP fehlschlägt (304).

13. Verfahren nach Anspruch 7, wobei:
der LSP durch ein Label Distribute Protocol (LDP) oder ein Constraint Route LDP (CR-LDP) aufgebaut wird;
die Anfragemeldung eine Label-Request-Meldung umfasst (701);
die Antwortmeldung eine Label-Mapping-Meldung umfasst (705);
die Fehlermeldung bezüglich der Aushandlung der Kapazitäten zur Überwachung der Ausführung des LSP eine Notification-Meldung umfasst (704).

14. Verfahren nach Anspruch 13, ferner umfassend: Erweitern eines perfMonitor-Typ-Länge-Werts (TLV), der ein Ausführungs-Überwachungsfeld in dem LDP oder CR-LDP enthält;
wobei der Quellknoten die Kapazitäten zur Überwachung der Ausführung des LSP, die durch den Quellknoten bereitgestellt werden, in dem Ausführungs-Überwachungsfeld des perfMonitor-TLV transportiert, und die Kapazitäten zur Überwachung der Ausführung des LSP, die durch den Quellknoten bereitgestellt werden, durch die Label-Request-Meldung, die den perfMonitor-TLV transportiert, an den Zielknoten sendet (701); und
wobei der Zielknoten die Kapazitäten zur Überwachung der Ausführung des LSP, die durch den Zielknoten bereitgestellt werden, in dem Ausführungs-Überwachungsfeld des perfMonitor-TLV transportiert, und die Kapazitäten zur Überwachung der Ausführung des LSP, die durch den Zielknoten bereitgestellt werden, durch die Label-Mapping-Meldung, die den perfMonitor-TLV transportiert, an den Quellknoten sendet (705).

15. Verfahren nach Anspruch 13, ferner umfassend: Hinzufügen eines Status-Codes, der anzeigt, dass die Aushandlung der Kapazitäten zur Überwachung der Ausführung des LSP fehlschlägt, zu einem Status-Code-Feld, um das Status-Code-Feld des bestehenden Status-TLV zu erweitern;
wobei, wenn der Zielknoten nicht die erforderlichen Kapazitäten zur Überwachung der Ausführung des LSP bereitstellt, der Zielknoten eine Notification-Meldung sendet, die den Status-TLV transportiert, um den Quellknoten zu benachrichtigen, dass die Aushandlung der Kapazitäten zur Überwachung der Ausführung des LSP fehlschlägt (704).

16. System zum Melden von Kapazitäten zur Überwachung der Ausführung eines Label Switching Paths (LSP), umfassend:
einen Quellknoten, der konfiguriert ist, um eine Anfragemeldung zum Einrichten eines LSP zu senden, die Kapazitäten zur Überwachung der Ausführung des LSP transportiert, die durch den Quellknoten bereitgestellt werden;
einen Zielknoten, der konfiguriert ist, um Kapazitäten zur Überwachung der Ausführung des LSP, die durch den Zielknoten bereitgestellt werden, in einer Antwortmeldung zu transportieren, die an den Quellknoten zurückgesendet wird, nach Empfangen der Anfragemeldung.

17. System nach Anspruch 16, wobei:
das Resource Reservation Protocol (RSVP) verwendet wird, um den LSP einzurichten, und das RSVP erweitert wird, um ein perfMonitor-Objekt aufzuweisen, das ein Ausführungs-Überwachungsfeld enthält;
der Quellknoten konfiguriert ist, um die Kapazitäten zur Überwachung der Ausführung des LSP, die durch den Quellknoten bereitgestellt werden, in dem Ausführungs-Überwachungsfeld des perfMonitor-Objekts zu transportieren, und die Kapazitäten zur Überwachung der Ausführung des LSP durch eine Path-Meldung, die das perfMonitor-Objekt transportiert, an den Zielknoten zu senden; und
der Zielknoten konfiguriert ist, um die Kapazitäten zur Überwachung der Ausführung des LSP, die durch den Zielknoten bereitgestellt werden, in dem Ausführungs-Überwachungsfeld des perfMonitor-Objekts zu transportieren, und die Kapazitäten zur Überwachung der Ausführung des LSP durch eine Resv-Meldung, die das perfMonitor-Objekt transportiert, an den Quellknoten zu senden.

18. System nach Anspruch 16, wobei:
das Label Distribute Protocol (LDP) oder das Constraint Route LDP (CR-LDP) verwendet wird, um das LSP aufzubauen, und das LDP oder das CR-LDP erweitert wird, um einen perfMonitor-Typ-Länge-Wert (TLV) aufzuweisen, der ein Ausführungs-Überwachungsfeld enthält;
der Quellknoten konfiguriert ist, um die Kapazitäten zur Überwachung der Ausführung des LSP, die durch den Quellknoten bereitgestellt werden, in dem Ausführungs-Überwachungsfeld des perfMonitor-TLV zu transportieren, und die Kapazitäten zur Überwachung der Ausführung des LSP durch eine Label-Request-Meldung, die den perfMonitor-TLV transportieren, an den Zielknoten zu senden; und
der Zielknoten konfiguriert ist, um die Kapazitäten zur Überwachung der Ausführung des LSP, die durch den Zielknoten bereitgestellt werden, in dem Ausführungs-Überwachungsfeld des perfMonitor-TLV zu transportieren, und die Kapazitäten zur Überwachung der Ausführung des LSP durch eine Label-Mapping-Meldung, die den perfMonitor-TLV transportiert, an den Quellknoten zu senden.

19. System zum Aushandeln von Kapazitäten zur Überwachung der Ausführung eines Label Switching Paths (LSP), umfassend:
einen Quellknoten, der konfiguriert ist, um eine Anfragemeldung zum Aufbauen eines LSP, die die Kapazitäten zur Überwachung der Ausführung des LSP transportiert, die von dem Quellknoten bereitgestellt werden, zu senden; einen Zielknoten, der konfiguriert ist, um die Kapazitäten zur Überwachung der Ausführung des LSP, die durch den Quellknoten bereitgestellt werden, mit den Kapazitäten zur Überwachung der Ausführung des LSP, die durch den Zielknoten bereitgestellt werden, abzugleichen, und die abgeglichenen Kapazitäten zur Überwachung der Ausführung des LSP in einer Antwortmeldung zu transportieren, die an den Quellknoten zurückgesendet wird.

20. System nach Anspruch 19, wobei:
der Quellknoten ferner konfiguriert ist, um einen Identifizierer zur Bestimmung des Bedarfs, der mit jeder Art von Kapazitäten zur Überwachung der Ausführung des LSP korrespondiert, in der Anfragemeldung zu transportieren; falls der Zielknoten nicht die erforderlichen Kapazitäten zur Überwachung der Ausführung des LSP bereitstellt, die durch den Identifizierer zur Bestimmung des Bedarfs angezeigt werden, der Zielknoten konfiguriert ist, um an den Quellknoten eine Fehlermeldung bezüglich der Aushandlung der Kapazitäten zur Überwachung der Ausführung des LSP zu senden; und
der Quellknoten ferner konfiguriert ist, um Anforderungen nach Kapazitäten zur Überwachung der Ausführung des LSP zu senken und eine Aushandlung über die Kapazitäten zur Überwachung der Ausführung des LSP nach dem Empfangen der Fehlermeldung bezüglich der Aushandlung der Kapazitäten zur Überwachung der Ausführung des LSP zu initiieren.

21. System nach Anspruch 19, wobei:
der LSP durch das Resource Reservation Protocol (RSVP) aufgebaut wird, und das RSVP erweitert wird, um ein perfMonitor-Objekt aufzuweisen, das ein Ausführungs-Überwachungsfeld enthält;
der Quellknoten konfiguriert ist, um die Kapazitäten zur Überwachung der Ausführung des LSP, die durch den Quellknoten bereitgestellt werden, in dem Ausführungs-Überwachungsfeld des perfMonitor-Objekts zu transportieren, und die Kapazitäten zur Überwachung der Ausführung des LSP durch eine Path-Meldung, die das perfMonitor-Objekt transportiert, an den Zielknoten zu senden; und
der Zielknoten konfiguriert ist, um die Kapazitäten zur Überwachung der Ausführung des LSP, die durch den Zielknoten bereitgestellt werden, in dem Ausführungs-Überwachungsfeld des perfMonitor-Objekts zu transportieren, und die Kapazitäten zur Überwachung der Ausführung des LSP durch eine Resv-Meldung, die das perfMonitor-Objekt transportiert, an den Quellknoten zu senden.

22. System nach Anspruch 21, wobei:
das RSVP weiter erweitert wird, ein Fehler-Code und ein Fehlerwert zu einem Fehler-Code-Feld und zu einem Fehlerwert-Feld eines Fehler-Beschreibungsobjekts hinzugefügt werden, der Fehler-Code und der Fehlerwert anzeigen, dass die Aushandlung der Kapazitäten zur Überwachung der Ausführung des LSP fehlschlägt; und wobei,
wenn der Zielknoten nicht die erforderlichen Kapazitäten zur Überwachung der Ausführung des LSP bereitstellt, der Zielknoten konfiguriert ist, um eine PathErr-Meldung, die das Fehler-Beschreibungsobjekt transportiert, an den Quellknoten zu senden, um den Quellknoten zu benachrichtigen, dass die Aushandlung der Kapazitäten zur Überwachung der Ausführung des LSP fehlschlägt.

23. System nach Anspruch 19, wobei:
der LSP durch das Label Distribute Protocol (LDP) oder ein Constraint Route LDP (CR-LDP) aufgebaut wird, und das LDP oder das CR-LDP erweitert wird, um einen perfMonitor-Typ-Länge-Wert (TLV) aufzuweisen, der ein Ausführungs-Überwachungsfeld transportiert;
der Quellknoten konfiguriert ist, um die Kapazitäten zur Überwachung der Ausführung des LSP, die durch den Quellknoten bereitgestellt werden, in dem Ausführungs-Überwachungsfeld des perfMonitor-TLV zu transportieren, und die Kapazitäten zur Überwachung der Ausführung des LSP, die von dem Quellknoten bereitgestellt werden, durch eine Label-Request-Meldung, die den perfMonitor-TLV transportiert, an den Zielknoten zu senden; und
der Zielknoten konfiguriert ist, um die Kapazitäten zur Überwachung der Ausführung des LSP, die durch den Zielknoten bereitgestellt werden, in dem Ausführungs-Überwachungsfeld des perfMonitor-TLV zu transportieren, und die Kapazitäten zur Überwachung der Ausführung des LSP, die von dem Zielknoten bereitgestellt werden, durch eine Label-Mapping-Meldung, die den perfMonitor-TLV transportiert, an den Quellknoten zu senden.

24. System nach Anspruch 23, wobei:
ein Status-Code-Feld des bestehenden Status-TLV erweitert wird, ein Status-Code, der anzeigt, dass eine Aushandlung der Kapazitäten zur Überwachung der Ausführung des LSP fehlschlägt, zu dem Status-Code-Feld des bestehenden Status-TLV hinzugefügt wird; und
wenn der Zielknoten nicht die erforderlichen Kapazitäten zur Überwachung der Ausführung des LSP bereitstellt, der Zielknoten konfiguriert ist, um eine Notification-Meldung, die den Status-TLV transportiert, zu senden, um den Quellknoten zu benachrichtigen, dass die Aushandlung der Kapazitäten zur Überwachung der Ausführung des LSP fehlschlägt.

## Revendications

1. Procédé destiné à indiquer des capacités de mise en oeuvre de surveillance de chemin de commutation d'étiquette (LSP), comportant les étapes ci-après consistant à:
envoyer, par le biais d'un noeud source, un message de demande pour établir un chemin LSP, transportant des capacités de mise en oeuvre de surveillance de chemin LSP délivrées par le noeud source, à un noeud de destination (201,401); et
lors de la réception du message de demande, renvoyer, par le biais du noeud de destination, un message de réponse transportant des capacités de mise en oeuvre de surveillance de chemin LSP délivrées par le noeud de destination au noeud source (203, 403).

2. Procédé selon la revendication 1, dans lequel:
le chemin LSP est établi via le protocole de réservation de ressources (RSVP);
le message de demande comporte un message de chemin « Path » (201);
le message de réponse comporte un message de réservation « Resv » (203).

3. Procédé selon la revendication 2, comportant en outre les étapes ci-après consistant à: prolonger un objet de surveillance de mise en oeuvre « perfMonitor » contenant un champ de surveillance de mise en oeuvre dans le protocole RSVP;
dans lequel le noeud source transporte les capacités de mise en oeuvre de surveillance de chemin LSP délivrées par le noeud source dans le champ de surveillance de mise en oeuvre d'objet de surveillance de mise en oeuvre « perfMonitor », et transmet au noeud de destination les capacités de mise en oeuvre de surveillance de chemin LSP par le biais du message de chemin « Path » transportant l'objet de surveillance de mise en oeuvre « perfMonitor » (201); et
le noeud de destination transporte les capacités de mise en oeuvre de surveillance de chemin LSP délivrées par le noeud de destination dans le champ de surveillance de mise en oeuvre d'objet de surveillance de mise en oeuvre « perfMonitor », et transmet au noeud source les capacités de mise en oeuvre de surveillance de chemin LSP par le biais du message de réservation « Resv » transportant l'objet de surveillance de mise en oeuvre « perfMonitor » (203).

4. Procédé selon la revendication 1, dans lequel:
le chemin LSP est établi via le protocole de distribution d'étiquette (LDP) ou le protocole LDP de route contrainte (CR-LDP);
le message de demande comporte un message de demande d'étiquette (401);
le message de réponse comporte un message de mise en correspondance d'étiquette (403).

5. Procédé selon la revendication 4, comportant en outre les étapes ci-après consistant à: augmenter une valeur de longueur type de surveillance de performance « perfMonitor » (TLV) contenant un champ de surveillance de mise en oeuvre dans le protocole LDP ou le protocole CR-LDP;
dans lequel le noeud source transporte les capacités de mise en oeuvre de surveillance de chemin LSP délivrées par le noeud source dans le champ de surveillance de mise en oeuvre de valeur TLV de surveillance « perfMonitor », et transmet au noeud de destination les capacités de mise en oeuvre de surveillance de chemin LSP par le biais du message de demande d'étiquette transportant la valeur TLV de surveillance « perfMonitor » (401); et
le noeud de destination transporte les capacités de mise en oeuvre de surveillance de chemin LSP délivrées par le noeud de destination dans le champ de surveillance de mise en oeuvre de valeur TLV de surveillance « perfMonitor », et transmet au noeud source les capacités de mise en oeuvre de surveillance de chemin LSP par le biais du message de mise en correspondance d'étiquette transportant la valeur TLV de surveillance « perfMonitor » (403).

6. Procédé pour négocier des capacités de mise en oeuvre de surveillance de chemin de commutation d'étiquette (LSP), comportant les étapes ci-après consistant à:
envoyer, par le biais d'un noeud source, un message de demande pour établir un chemin LSP, transportant des capacités de mise en oeuvre de surveillance de chemin LSP délivrées par le noeud source, à un noeud de destination (301, 701); et
mettre en correspondance, par le biais du noeud de destination, les capacités de mise en oeuvre de surveillance de chemin LSP délivrées par le noeud source et les capacités de mise en oeuvre de surveillance de chemin LSP délivrées par le noeud de destination (303, 703), et renvoyer un message de réponse transportant les capacités de mise en oeuvre de surveillance mises en correspondance de chemin LSP au noeud source (305, 705).

7. Procédé selon la revendication 6, comportant en outre les étapes ci-après consistant à:
transporter, par le biais du noeud source, un identifiant de niveau d'exigence correspondant à chaque type de capacités de mise en oeuvre de surveillance de chemin LSP dans le message de demande;
dans lequel, dans le processus consistant à mettre en correspondance les capacités de mise en oeuvre de surveillance de chemin LSP par le biais du noeud de destination, si le noeud de destination ne fournit pas les capacités requises de mise en oeuvre de surveillance de chemin LSP indiquées par l'identifiant de niveau d'exigence, le noeud de destination transmet au noeud source un message d'échec de négociation de capacités de mise en oeuvre de surveillance de chemin LSP (304, 704).

8. Procédé selon la revendication 7, comportant en outre les étapes ci-après consistant à:
lors de la réception du message d'échec de négociation de capacités de mise en oeuvre de surveillance de chemin LSP, diminuer, par le biais du noeud source, les exigences de capacités de mise en oeuvre de surveillance de chemin LSP et initier une négociation de capacités de mise en oeuvre de surveillance de chemin LSP (306, 706).

9. Procédé selon la revendication 7, comportant en outre les étapes ci-après consistant à:
lors de la réception du message d'échec de négociation de capacités de mise en oeuvre de surveillance de chemin LSP, mettre fin, par le biais du noeud source, à la négociation en cours des capacités de mise en oeuvre de surveillance de chemin LSP (306, 706).

10. Procédé selon la revendication 7, dans lequel:
le chemin LSP est établi via le protocole de réservation de ressources (RSVP);
le message de demande comporte un message de chemin « Path » (301);
le message de réponse comporte un message de réservation « Resv » (305);
le message d'échec de négociation de capacités de mise en oeuvre de surveillance de chemin LSP comporte un message d'erreur de chemin « PathErr » (304).

11. Procédé selon la revendication 10, comportant en outre les étapes ci-après consistant à: dans le protocole RSVP, augmenter un objet de surveillance de mise en oeuvre « perfMonitor » contenant un champ de surveillance de mise en oeuvre;
dans lequel, le noeud source transporte les capacités de mise en oeuvre de surveillance de chemin LSP délivrées par le noeud source dans le champ de surveillance de mise en oeuvre d'objet de surveillance de mise en oeuvre « perfMonitor », et transmet au noeud de destination les capacités de mise en oeuvre de surveillance de chemin LSP par le biais du message de chemin « Path » transportant l'objet de surveillance de mise en oeuvre « perfMonitor » (301); et
le noeud de destination transporte les capacités de mise en oeuvre de surveillance de chemin LSP délivrées par le noeud de destination dans le champ de surveillance de mise en oeuvre d'objet de surveillance de mise en oeuvre « perfMonitor », et transmet au noeud source les capacités de mise en oeuvre de surveillance de chemin LSP par le biais du message de réservation « Resv » transportant l'objet de surveillance de mise en oeuvre « perfMonitor » (305).

12. Procédé selon la revendication 10, comportant en outre les étapes ci-après consistant à: ajouter un code d'erreur et une valeur d'erreur, indiquant que la négociation de capacités de mise en oeuvre de surveillance de chemin LSP échoue, à un champ de code d'erreur et un champ de valeur d'erreur pour prolonger un objet de description d'erreur;
dans lequel, lorsque le noeud de destination ne fournit pas les capacités requises de mise en oeuvre de surveillance de chemin LSP, le noeud de destination envoie un message d'erreur de chemin « PathErr » transportant l'objet de description d'erreur prolongé au noeud source pour indiquer au noeud source que la négociation de capacités de mise en oeuvre de surveillance de chemin LSP échoue (304).

13. Procédé selon la revendication 7, dans lequel:
le chemin LSP est établi via un protocole de distribution d'étiquette (LDP) ou un protocole LDP de route contrainte (CR-LDP);
le message de demande comporte un message de demande d'étiquette (701);
le message de réponse comporte un message de mise en correspondance d'étiquette (705);
le message d'échec de négociation de capacités de mise en oeuvre de surveillance de chemin LSP comporte un message de notification « Notification » (704).

14. Procédé selon la revendication 13, comportant en outre les étapes ci-après consistant à: augmenter une valeur de longueur type de surveillance de performance « perfMonitor » (TLV) contenant un champ de surveillance de mise en oeuvre dans le protocole LDP ou le protocole CR-LDP;
dans lequel le noeud source transporte les capacités de mise en oeuvre de surveillance de chemin LSP délivrées par le noeud source dans le champ de surveillance de mise en oeuvre de valeur TLV de surveillance « perfMonitor », et transmet au noeud de destination les capacités de mise en oeuvre de surveillance de chemin LSP délivrées par le noeud source par le biais du message de demande d'étiquette transportant la valeur TLV de surveillance « perfMonitor » (701); et
le noeud de destination transporte les capacités de mise en oeuvre de surveillance de chemin LSP délivrées par le noeud de destination dans le champ de surveillance de mise en oeuvre de valeur TLV de surveillance « perfMonitor », et transmet au noeud source les capacités de mise en oeuvre de surveillance de chemin LSP délivrées par le noeud de destination par le biais du message de mise en correspondance d'étiquette transportant la valeur TLV de surveillance « perfMonitor » (705).

15. Procédé selon la revendication 13, comportant en outre les étapes ci-après consistant à: ajouter un code d'état, indiquant que la négociation de capacités de mise en oeuvre de surveillance de chemin LSP échoue, à un champ de code d'état pour prolonger le champ de code d'état de la valeur TLV d'état existante;
dans lequel, lorsque le noeud de destination ne fournit pas les capacités requises de mise en oeuvre de surveillance de chemin LSP, le noeud de destination envoie un message de notification « Notification » transportant la valeur TLV d'état pour indiquer au noeud source que la négociation de capacités de mise en oeuvre de surveillance de chemin LSP échoue (704).

16. Système destiné à indiquer des capacités de mise en oeuvre de surveillance de chemin de commutation d'étiquette (LSP), comportant:
un noeud source, configuré de manière à envoyer un message de demande pour établir un chemin LSP, transportant des capacités de mise en oeuvre de surveillance de chemin LSP délivrées par le noeud source;
un noeud de destination, configuré de manière à transporter des capacités de mise en oeuvre de surveillance de chemin LSP délivrées par le noeud de destination dans un message de réponse renvoyé au noeud source lors de la réception du message de demande.

17. Système selon la revendication 16, dans lequel:
le protocole de réservation de ressources (RSVP) est utilisé pour établir le chemin LSP, et le protocole RSVP est prolongé de manière à avoir un objet de surveillance de mise en oeuvre « perfMonitor » contenant un champ de surveillance de mise en oeuvre;
le noeud source est configuré de manière à transporter les capacités de mise en oeuvre de surveillance de chemin LSP délivrées par le noeud source dans le champ de surveillance de mise en oeuvre d'objet de surveillance de mise en oeuvre « perfMonitor », et à envoyer au noeud de destination les capacités de mise en oeuvre de surveillance de chemin LSP par le biais d'un message de chemin « Path » transportant l'objet de surveillance de mise en oeuvre « perfMonitor »; et
le noeud de destination est configuré de manière à transporter les capacités de mise en oeuvre de surveillance de chemin LSP délivrées par le noeud de destination dans le champ de surveillance de mise en oeuvre d'objet de surveillance de mise en oeuvre « perfMonitor », et à envoyer au noeud source les capacités de mise en oeuvre de surveillance de chemin LSP par le biais d'un message de réservation « Resv » transportant l'objet de surveillance de mise en oeuvre « perfMonitor ».

18. Système selon la revendication 16, dans lequel:
le protocole de distribution d'étiquette (LDP) ou le protocole LDP de route contrainte (CR-LDP) est utilisé pour établir le chemin LSP, et le protocole LDP ou le protocole CR-LDP est prolongé de manière à avoir une valeur de longueur type de surveillance de performance « perfMonitor » (TLV) contenant un champ de surveillance de mise en oeuvre;
le noeud source est configuré de manière à transporter les capacités de mise en oeuvre de surveillance de chemin LSP délivrées par le noeud source dans le champ de surveillance de mise en oeuvre de valeur TLV de surveillance « perfMonitor », et à envoyer au noeud de destination les capacités de mise en oeuvre de surveillance de chemin LSP par le biais d'un message de demande d'étiquette transportant la valeur TLV de surveillance « perfMonitor »; et
le noeud de destination est configuré de manière à transporter les capacités de mise en oeuvre de surveillance de chemin LSP délivrées par le noeud de destination dans le champ de surveillance de mise en oeuvre de valeur TLV de surveillance « perfMonitor », et à envoyer au noeud source les capacités de mise en oeuvre de surveillance de chemin LSP par le biais d'un message de mise en correspondance d'étiquette transportant la valeur TLV de surveillance « perfMonitor ».

19. Système pour négocier des capacités de mise en oeuvre de surveillance de chemin de commutation d'étiquette (LSP), comportant les étapes ci-après consistant à:
un noeud source configuré de manière à envoyer un message de demande pour établir un chemin LSP, transportant des capacités de mise en oeuvre de surveillance de chemin LSP délivrées par le noeud source;
un noeud de destination, configuré de manière à mettre en correspondance les capacités de mise en oeuvre de surveillance de chemin LSP délivrées par le noeud source et les capacités de mise en oeuvre de surveillance de chemin LSP délivrées par le noeud de destination, et à transporter les capacités de mise en oeuvre de surveillance mises en correspondance de chemin LSP dans un message de réponse renvoyé au noeud source.

20. Système selon la revendication 19, dans lequel:
le noeud source est en outre configuré de manière à transporter un identifiant de niveau d'exigence correspondant à chaque type de capacités de mise en oeuvre de surveillance de chemin LSP dans le message de demande;
si le noeud de destination ne fournit pas les capacités requises de mise en oeuvre de surveillance de chemin LSP indiquées par l'identifiant de niveau d'exigence, le noeud de destination est configuré de manière à envoyer au noeud source un message d'échec de négociation de capacités de mise en oeuvre de surveillance de chemin LSP; et
le noeud source est en outre configuré de manière à abaisser les exigences de capacités de mise en oeuvre de surveillance de chemin LSP et à initier une négociation de capacités de mise en oeuvre de surveillance de chemin LSP lors de la réception du message d'échec de négociation de capacités de mise en oeuvre de surveillance de chemin LSP.

21. Système selon la revendication 19, dans lequel:
le chemin LSP est établi via le protocole de réservation de ressources (RSVP), et le protocole RSVP est prolongé de manière à avoir un objet de surveillance de mise en oeuvre « perfMonitor » contenant un champ de surveillance de mise en oeuvre;
le noeud source est configuré de manière à transporter les capacités de mise en oeuvre de surveillance de chemin LSP délivrées par le noeud source dans le champ de surveillance de mise en oeuvre d'objet de surveillance de mise en oeuvre « perfMonitor », et à envoyer au noeud de destination les capacités de mise en oeuvre de surveillance de chemin LSP par le biais d'un message de chemin « Path » transportant l'objet de surveillance de mise en oeuvre « perfMonitor »; et
le noeud de destination est configuré de manière à transporter les capacités de mise en oeuvre de surveillance de chemin LSP délivrées par le noeud de destination dans le champ de surveillance de mise en oeuvre d'objet de surveillance de mise en oeuvre « perfMonitor », et à envoyer au noeud source les capacités de mise en oeuvre de surveillance de chemin LSP par le biais d'un message de réservation « Resv » transportant l'objet de surveillance de mise en oeuvre « perfMonitor ».

22. Système selon la revendication 21, dans lequel:
le protocole RSVP est prolongé, un code d'erreur et une valeur d'erreur sont ajoutés à un champ de code d'erreur et à un champ de valeur d'erreur d'un objet de description d'erreur, le code d'erreur et la valeur d'erreur indiquent que la négociation de capacités de mise en oeuvre de surveillance de chemin LSP échoue; et
lorsque le noeud de destination ne fournit pas les capacités requises de mise en oeuvre de surveillance de chemin LSP, le noeud de destination est configuré de manière à envoyer un message d'erreur de chemin «PathErr» transportant l'objet de description d'erreur au noeud source pour indiquer au noeud source que la négociation de capacités de mise en oeuvre de surveillance de chemin LSP échoue.

23. Système selon la revendication 19, dans lequel:
le chemin LSP est établi via le protocole de distribution d'étiquette (LDP) ou un protocole LDP de route contrainte (CR-LDP), et le protocole LDP ou le protocole CR-LDP est prolongé de manière à avoir une valeur de longueur type de surveillance de performance « perfMonitor » (TLV) transportant un champ de surveillance de mise en oeuvre;
le noeud source est configuré de manière à transporter les capacités de mise en oeuvre de surveillance de chemin LSP délivrées par le noeud source dans le champ de surveillance de mise en oeuvre de valeur TLV de surveillance « perfMonitor », et à envoyer au noeud de destination les capacités de mise en oeuvre de surveillance de chemin LSP délivrées par le noeud source par le biais d'un message de demande d'étiquette transportant la valeur TLV de surveillance « perfMonitor »; et
le noeud de destination est configuré de manière à transporter les capacités de mise en oeuvre de surveillance de chemin LSP délivrées par le noeud de destination dans le champ de surveillance de mise en oeuvre de valeur TLV de surveillance « perfMonitor », et à envoyer au noeud source les capacités de mise en oeuvre de surveillance de chemin LSP délivrées par le noeud de destination par le biais d'un message de mise en correspondance d'étiquette transportant la valeur TLV de surveillance « perfMonitor ».

24. Système selon la revendication 23, dans lequel:
un champ de code d'état de la valeur TLV d'état existante est prolongé, un code d'état indiquant qu'une négociation de capacités de mise en oeuvre de surveillance de chemin LSP échoue est ajouté au champ de code d'état de la valeur TLV d'état existante; et
lorsque le noeud de destination ne fournit pas les capacités requises de mise en oeuvre de surveillance de chemin LSP, le noeud de destination est configuré de manière à envoyer un message de notification « Notification » transportant la valeur TLV d'état pour indiquer au noeud source que la négociation de capacités de mise en oeuvre de surveillance de chemin LSP échoue.
